(19) Europäisches Patentamt
European Patent Office
Office européen des brevets

(11) EP 4 163 343 A1

(12) # EUROPEAN PATENT APPLICATION

(43) Date of publication:
**12.04.2023 Bulletin 2023/15**

(21) Application number: **21200941.9**

(22) Date of filing: **05.10.2021**

(51) International Patent Classification (IPC):
***C09D 11/52*** (2014.01) ***C09D 11/106*** (2014.01)
***C09D 11/322*** (2014.01) ***C09D 11/037*** (2014.01)
***C09D 11/36*** (2014.01) ***C09D 11/033*** (2014.01)

(52) Cooperative Patent Classification (CPC):
**C09D 11/037; C09D 11/033; C09D 11/106; C09D 11/322; C09D 11/36; C09D 11/52**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **AGFA-GEVAERT NV**
**2640 Mortsel (BE)**

(72) Inventor: **BOLLEN, Dirk**
**2640 Mortsel (BE)**

(74) Representative: **Viaene, Kris**
**AGFA NV**
**Intellectual Property Department**
**Septestraat 27**
**2640 Mortsel (BE)**

(54) **CONDUCTIVE INKS**

(57) A conductive ink comprising metallic nanoparticles, a liquid carrier and an optional binder, characterized in that the conductive ink further includes a compound R selected from the group consisting of vinyl phosphonic acid, an ester of vinyl phosphonic acid and a homo- or copolymer thereof.

EP 4 163 343 A1

## Description

### Field of the Invention

The present invention relates to conductive ink, in particular conductive nano silver inks.

### Background of the Invention

The interest in metallic printing or coating fluids comprising metallic nanoparticles has increased during the last decades due to their unique properties when compared to the bulk properties of a given metal. For example, the melting point of metallic nanoparticles decreases with decreasing particle size making them of interest for printed electronics, electrochemical, optical, magnetic and biological applications.

The production of stable and concentrated metallic printing or coating fluids, which can be printed or coated at high speed is of great interest as it enables the preparation of electronic devices at low costs.

Metallic printing or coating fluids are typically conductive inks comprising metallic nanoparticles and a dispersion medium. Such conductive inks can be directly used as a printing or coating fluid. However, additional ingredients are often added to the conductive ink to optimize the properties of the resulting metallic printing or coating fluids.

The preparation of metallic nanoparticles may be carried out in water or organic solvents by the so-called polyol synthesis as disclosed in for example 'Approaches to the synthesis and Characterization of Spherical and Anisotropic Silver Nanomaterials', Metallic Nanomaterials Vol. 1., Edited by Challa S.S.R.Kumar, Wiley-VCH Verlag GmbH&Co.KGaA, Weinheim, by a derivative of the polyol synthesis methodology or by an in-situ reduction of metallic salts in the presence of various reducing agents. Such methods are disclosed in for example US2010143591, US2009142482, US20060264518, EP-A 2147733, EP-A 2139007, EP-A 803551, EP-A 2012952, EP-A 2030706, EP-A 1683592, EP-A 166617, EP-A 2119747, EP-A 2087490, EP-A 2010314, WO2008/151066, WO2006/076603, WO2009/152388, WO2009/157393.

The conductive inks are typically applied on a substrate by a printing technique such as inkjet printing, screen printing, or flexographic printing.

Screen printing is considered a cost effective method wherein high viscosity conductive inks may be printed on various substrates.

Conductive inks that may be used in a screen printing method are disclosed in for example EP-A 2781562, EP-A 3099145, EP-A 3287499 EP-A 3099146 and WO2017/102574.

Silver based screen printing inks may be used for metallisation of silicon wafer solar cells. Metallisation of conventional silicon wafer solar cells typically includes a high temperature annealing step (± 800 °C). However, with so-called heterojunction solar cells the metallisation includes an annealing step at moderate temperatures, typically ≤ 250 °C. Nano-silver screen inks characterized by low sintering temperatures may therefore be used for metallisation of such heterojunction solar cells. An advantage of such nano-silver screen inks, compared with for example traditional flake inks, is a potential reduction of the cost price as less silver is needed to obtain high conductivities.

To ensure a high efficiency however of the solar cells, a low contact resistance between the printed nano-silver and ITO is necessary.

### Summary of the invention

It is an object of the present invention to provide a conductive nano-silver ink wherewith heterojunction solar cells may be realized at lower costs.

This object is realized by a conductive ink as defined in claim 1.

Further advantages and embodiments of the present invention will become apparent from the following description and the dependent claims.

### Brief description of the drawings

<u>**Figure 1**</u> schematically illustrates the measurment method used to determine the contact resistance of nano-silver lines towards ITO.

<u>**Figure 2**</u> schematically depicts an embodiment of a heterojunction solar cell.

## Detailed description of the invention

Definitions

The terms polymeric support and foil, as used herein, mean a self-supporting polymer-based sheet, which may be associated with one or more adhesion layers, e.g. subbing layers. Supports and foils are usually manufactured through extrusion.

The term layer as used herein, is considered not to be self-supporting and is manufactured by coating or spraying it on a (polymeric) support or foil.

PET is an abbreviation for polyethyledine terephthalate.

The term alkyl means all variants possible for each number of carbon atoms in the alkyl group i.e. methyl, ethyl, for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethylpropyl and 2-methyl-butyl *etc.*

Unless otherwise specified a substituted or unsubstituted alkyl group is preferably a $C_1$ to $C_6$-alkyl group.

Unless otherwise specified a substituted or unsubstituted alkenyl group is preferably a $C_2$ to $C_6$-alkenyl group.

Unless otherwise specified a substituted or unsubstituted alkynyl group is preferably a $C_2$ to $C_6$-alkynyl group.

Unless otherwise specified a substituted or unsubstituted aralkyl group is preferably a phenyl group or a naphthyl group including one, two, three or more $C_1$ to $C_6$-alkyl groups.

Unless otherwise specified a substituted or unsubstituted alkaryl group is preferably a $C_1$ to $C_6$-alkyl group including an aryl group, preferably a phenyl group or naphthyl group.

Unless otherwise specified a substituted or unsubstituted aryl group is preferably a substituted or unsubstituted phenyl group or naphthyl group.

A cyclic group includes at least one ring structure and may be a monocyclic- or polycyclic group, meaning one or more rings fused together.

A heterocyclic group is a cyclic group that has atoms of at least two different elements as members of its ring(s).The counterparts of heterocyclic groups are homocyclic groups, the ring structures of which are made of carbon only. Unless otherwise specified a substituted or unsubstituted heterocyclic group is preferably a five- or six-membered ring substituted by one, two, three or four heteroatoms, preferably selected from oxygen atoms, nitrogen atoms, sulphur atoms, selenium atoms or combinations thereof.

An alicyclic group is a non-aromatic homocyclic group wherein the ring atoms consist of carbon atoms.

The term heteroaryl group means a monocyclic- or polycyclic aromatic ring comprising carbon atoms and one or more heteroatoms in the ring structure, preferably, 1 to 4 heteroatoms, independently selected from nitrogen, oxygen, selenium and sulphur. Preferred examples of heteroaryl groups include, but are not limited to, pyridinyl, pyridazinyl, pyrimidyl, pyrazyl, triazinyl, pyrrolyl, pyrazolyl, imidazolyl, (1,2,3,)- and (1,2,4)-triazolyl, pyrazinyl, pyrimidinyl, tetrazolyl, furyl, thienyl, isoxazolyl, thiazolyl, isoxazolyl, and oxazolyl. A heteroaryl group can be unsubstituted or substituted with one, two or more suitable substituents. Preferably, a heteroaryl group is a monocyclic ring, wherein the ring comprises 1 to 5 carbon atoms and 1 to 4 heteroatoms.

The term substituted, in e.g. substituted alkyl group means that the alkyl group may be substituted by other atoms than the atoms normally present in such a group, i.e. carbon and hydrogen. For example, a substituted alkyl group may include a halogen atom or a thiol group. An unsubstituted alkyl group contains only carbon and hydrogen atoms.

Unless otherwise specified a substituted alkyl group, a substituted alkenyl group, a substituted alkynyl group, a substituted aralkyl group, a substituted alkaryl group, a substituted aryl, a substituted heteroaryl and a substituted heterocyclic group are preferably substituted by one or more substituents selected from the group consisting of methyl, ethyl, n-propyl, isopropyl, n-butyl, 1-isobutyl, 2-isobutyl and tertiary-butyl, ester, amide, ether, thioether, ketone, aldehyde, sulfoxide, sulfone, sulfonate ester, sulphonamide, -Cl, -Br, -I, -OH, - SH, -CN and $-NO_2$.

## The conductive ink

The conductive ink according to the present invention comprises metallic nanoparticles, a liquid carrier and an optional binder, characterized in that the conductive ink further includes a compound R as described below.

Compound R

The compound R is selected from the group consisting of vinyl phosphonic acid, an ester of vinyl phosphonic acid and a homo- or copolymer thereof.

Preferred esters of vinyl phoshonic acid are vinylphosphonic acid dimethyl ester and vinylphosphonic acid dieethyl ester.

Compound R is preferably vinyl phosphonic acid or a polymer thereof, more preferably polyvinyl phosphonic acid.

The amount of Compound R is preferably 0.025 wt% or higher, more preferably 0.05 wt% or higher, most preferably 0.1 wt% or higher. The wt% relative to the total weight of the conductive ink. When the amount is too low, the decrease of the contact resistance may be too small.

The amount of Compound R is preferably not more than 5, more preferably not more than 1, most preferably not more than 0.5. When the amount is too high, a decrease of the conductivity may be observed.

The Compound R may be added during the preparation of the metallic nanoparticles or may be added during the preparation of the conductive ink.

Metallic nanoparticles

The conductive ink of the present invention comprises metallic nanoparticles.

The metallic nanoparticles comprise one or more metals in elemental or alloy form. The metal is preferably selected from the group consisting of silver, gold, copper, nickel, cobalt, molybdenum, palladium, platinum, tin, zinc, titanium, chromium, tantalum, tungsten, iron, rhodium, iridium, ruthenium, osmium, aluminium and lead.

Metallic nanoparticles based on silver, copper, molybdenum, aluminium, gold, copper, or a combination thereof, are particularly preferred.

Most preferred are silver nanoparticles. Particular preferred metallic nanoparticles consist of silver, i.e. they contain only minor amounts (less than 5 wt%, preferably less than 2.5 wt%, most preferably less than 1 wt%) of elements other than silver.

The term "nanoparticles" refers to dispersed particles having an average particle size or average particle diameter of less than 150 nm, preferably less than 100 nm, more preferably less than 50 nm, most preferably less than 30 nm. The average particle diameter referred to is determined with Transmission Electron Microscopy (TEM).

A conductive ink, such as for example a silver ink, may comprise primary particles and secondary particles. The latter may be aggregated primary particles. The particle diameter referred to above is the particle diameter of the primary particles.

The conductive ink preferably comprises at least 10 wt %, more preferably at least 25 wt %, most preferably at least 50 wt %, particularly preferred at least 75 wt %, of metallic nanoparticles, relative to the total weight of the conductive ink.

Liquid Carrier

The metallic nanoparticle dispersion comprises a liquid carrier.

The liquid carrier is preferably an organic solvent. The organic solvent may be selected from alcohols, aromatic hydrocarbons, ketones, esters, aliphatic hydrocarbons, dimethylsulfoxide (DMSO), higher fatty acids, carbitols, cellosolves, and higher fatty acid esters.

Suitable alcohols include methanol, ethanol, propanol, 1-butanol, 1-pentanol, 2-butanol, t-butanol.

Suitable aromatic hydrocarbons include toluene and xylene.

Suitable ketones include methyl ethyl ketone, methyl isobutyl ketone, 2,4-pentanedione and hexa-fluoroacetone.

Also glycol, glycolethers, N,N-dimethyl- acetamide, N,N-dimethylformamide may be used.

A mixture of organic solvents may be used to optimize the properties of the metallic nanoparticle dispersion.

Preferred organic solvents are high boiling solvents. High boiling organic solvents referred to herein are solvents which have a boiling point that is higher than the boiling point of water (> 100°C).

Preferred high boiling solvents are shown in Table 1.

Table 1

| Chemical formula | Chemical name | Bp (°C) |
|---|---|---|
| 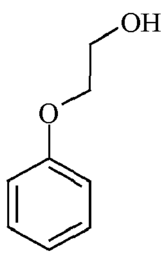 | 2-fenoxy ethanol (ethylene glycol monophenylether) | 247 |

(continued)

| Chemical formula | Chemical name | Bp (°C) |
|---|---|---|
| 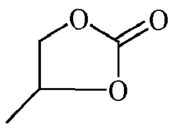 | 4-methyl-1,3-dioxolan-2-one (propylene carbonate) | 242 |
| 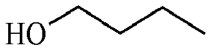 | n-butanol | 117 |
| 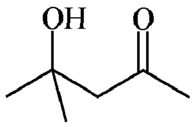 | 4-hydroxy-4-methylpentan-2-one (diaceton alcohol) | 168 |
| 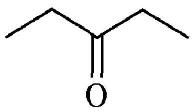 | Pentan-3-one (diethyl ketone) | 102 |
| 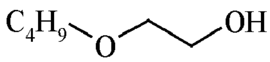 | 2-Butoxyethanol (Ethylene glycol monobutyl ether) | 171 |
| 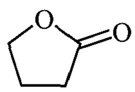 | Dihydrofuran-2(3H)-one (Gamma-butyrolacton) | 204 |
| 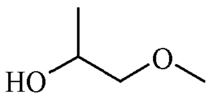 | 1-methoxy-2-propanol (propylene glycol monomethyl ether | 120 |
| 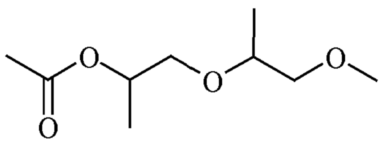 | Dowanol DPMA (Dipropyleenglycol methyl ether acetate) | 209 |
| 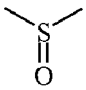 | dimethylsulfoxide | 189 |
| 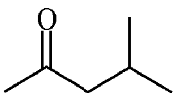 | Methyl isobutyl ketone | 119 |
| 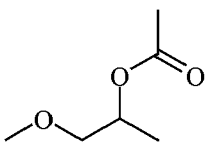 | Propylene glycol mono methyl ether acetate | 146 |

Particularly preferred high boiling solvents used in conductive inkjet inks are 2-phenoxy-ethanol, propylene carbonate, n-butanol, gamma-butyro-lactone, and mixtures thereof.

Particularly preferred high boiling solvents are dimethylsulfoxide, 2-butoxy-ethanol, dipropylene glycol methyl ether acetate, methyl 5-(dimethylamino)-2-methyl-5-oxopentanoate and mixtures thereof.

Particularly preferred high boiling solvents used in conductive flexo and gravure printing inks are methyl isobutyl ketone, 2-butoxy-ethanol, propylene glycol mono methyl ether acetate, and mixtures thereof.

The liquid carrier may also comprise solvents which are used in the preparation method of the nanoparticles, such as those used in the methods disclosed in EP-A 2671927 and EP-A 2781562, for example 2-pyrrolidone.

It has been observed that silver inks wherein the liquid carrier comprises methyl-5-(dimethylamino)-2-methyl-5-oxopentonaoate or methylbutyrolactone have improved sticking behavior and improved varnish stability.

The amount of the liquid carrier depends on the desired viscosity of the printing or coating fluid. The amount of the liquid carrier is preferably less than 95 wt%, more preferably less than 90 wt%, most preferably less than 85 wt% relative to the total weight of the conductive ink.

Binder

The conductive ink may comprise a binder. The binder of the ink is preferably compatible with water or the polyol referred to above and at the same time compatible with the metallic nano-particles.

A water or polyol compatible binder referred to is a binder that is soluble in the solvent mixture of the conductive ink according to the present invention. Using a binder that is not compatible with water or polyol may result in a cloudy solution of the binder in the solvent mixture of the conductive ink, even at low concentrations of the binder or after stirring and/or heating the solution.

A binder that is not compatible with the metallic nano-particles may result in separation of part of the solvent from the conductive ink when shear is applied to the ink.

A test to determine whether or not a binder is water or polyol compatible and/or compatible with the metallic nano-particles is the following:

- a small quantity of the conductive ink is applied between two transparant foils;
- the ink is pressed between the foils with, for example, a roller or squeegee resulting in a spreading of the ink resulting in a thin layer of ink between the transparant foils.

When the binder is not sufficiently compatible with water or polyol and/or with the metallic nano-particles, visual inspection of the thin ink layer between the tranparent foils may reveal areas consisting essentially of solvent, i.e. no or a minor amount of metallic nano-particles. Such areas are visible due to their lower density the result of a lower concentration of metallic nanoparticles.

In principle one type of binder can be selected, which is compatible with both water or the polyol and the metallic nano-particles. However, to enable optimization of other properties such as conductivity, adhesion, etc., it is preferred to use at least two different binders, i.e. a water or polyol compatible binder and a metallic nano-particle compatible binder.

The ratio of the water or polyol compatible binder to the metallic nano-particle compatible binder is preferably more than or equal to 7, more preferably more than or equal to 9.

The water or polyol compatible binder is preferably a water or polyol soluble binder.

Such a water or polyol soluble binder is preferably selected from the group consisting of polyvinylalcohol, polyvinylpyrrolidone, polyvinylacetaat, sodium poly(styrenesulfonate), polyacrylic acid, gelatine, and mixtures thereof.

A metallic nano-particle compatible binder stabilizes the nano-particles in the ink while fast and/or low temperature sintering of the printed nano-particles is still possible. Also, the binder preferably has a positive effect on the adhesion of the applied and sintered metallic pattern towards various substrates. In addition, the binder ensures a sufficient pot-life of the ink and homogeneous layers of ink while printing or coating.

A metallic nano-particle compatible binder is preferably a polyvinylchloride copolymer.

A particular preferred polyvinylchloride copolymer is a copolymer of vinyl chloride and a hydroxyfunctional monomer.

The hydroxyl functional monomer is preferably selected from the group consisting of 2-hydroxypropyl acrylate, 1-hydroxy-2-propyl acrylate, 3-methyl-3-buten-1-ol, 2-methyl-2-propenoic acid 2-hydroxypropyl ester, 2-hydroxy-3-chloropropyl methacrylate, N-methylolmethacrylamide, 2-hydroxyethyl methacrylate, poly(ethylene oxide) monomethacrylate, glycerine monomethacrylate, 1,2-propylene glycol methacrylate, 2,3-hydroxypropyl methacrylate, 2-hydroxyethyl acrylate, vinyl alcohol, N-methylolacrylamid, 2-propenoic acid 5-hydroxypentyl ester, 2-methyl-2-propenoic acid, 3-chloro-2-hydroxypropyl ester, 1-hydroxy-2-propenoic acid, 1-methylethyl ester, 2-hydroxyethyl allyl ether, 4-hydroxybutyl acrylate, 1,4-butanediol monovinyl ether, poly(ε-caprolactone) hydroxyethyl methacrylate ester, poly(ethylene oxide) monomethacrylate, 2-methyl-2-propenoic acid, 2,5-dihydroxypentyl ester, 2-methyl-2-propenoic acid, 5,6-dihydroxyhexyl ester, 1,6-hexanediol monomethacrylate, 1,4-dideoxy-pentitol, 5-(2-methyl-2-propenoate), 2-propenoic acid, 2,4-dihydroxybutyl ester, 2-propenoic acid, 3,4-dihydroxybutyl ester, 2-methyl-2-propenoic acid, 2-hydroxybutyl ester, 3-hydroxypropyl methacrylate, 2-propenoic acid, 2,4-dihydroxybutyl ester, and isopropenyl alcohol.

The hydroxyl functional monomer is most preferably vinyl alcohol, 2-hydroxypropyl acrylate, 1-hydroxy-2-propyl acrylate, 4-hydroxybutyl acrylate, 2-hydroxyethyl methacrylate, 2-hydroxyethyl acrylate.

Examples of copolymers of vinyl chloride and a hydroxyfunctional monomer are chloroethylene-vinyl acetate-vinyl alcohol copolymer, vinyl alcohol-vinyl chloride copolymer, 2-hydroxypropyl acrylate-vinyl chloride polymer, propanediol monoacrylate-vinyl chloride copolymer, vinyl acetate-vinyl chloride-2-hydroxypropyl acrylate copolymer, hydroxyethyl acrylate-vinyl chloride copolymer, 2-hydroxyethyl methacrylate-vinyl chloride copolymer.

A particular preferred copolymer is a copolymer of vinyl chloride, vinyl acetate and a hydroxyfunctional monomer.

The amount of vinyl chloride is preferably more than or equal to 90 wt% relative to the total weight of the copolymer.

The Molecular Weight (MW) of the copolymer of vinyl chloride and a hydroxyfunctional monomer, measured with Gel Permeation Chromatographt (GPC) usin polystyrene standards and THF as eluent, is preferably more than or equal to 15 000, more preferalby more than or equal to 20 000.

The K value of the copolymer of vinyl chloride and a hydroxyfunctional monomer, measured according to ISO1628-2 (1998) is preferably more than or equal to 40, more preferably more than or equal to 45.

Suitable copolymers are for example Solbin® A, which is a copolymer of 92 wt% vinylchloride - 3 wt% vinylacetate - 5 wt% vinylalchohol, Solbin® AL, which is a copolymer of 93 wt% vinylchloride - 2 wt% vinylacetate - 5 wt% vinylalchohol, Solbin® TA2, which is a copolymer of 83 wt% vinylchloride - 4 wt% vinylacetate - 13 wt% hydroxyalkyl acrylate, Solbin® TA3 which is a copolymer of 83 wt% vinylchloride - 4 wt% vinylacetate -13 wt% hydroxyalkylacrylate, Solbin® TAO, which is a copolymer of 91 wt% vinylchloride - 2 wt% vinylacetate - 7 wt% vinyl alcohol, all commercially available from Shin Etsu; Vinnol® E15/40 A, Vinnol® E 15/45 A, Vinnol® E 15/48 A, Vinnol® E 22/48 A, and Vinnol® H 5/50 A, all commercially available from Wacker Chemie; Sunvac® GH, which is a copolymer of 90 wt% vinylchloride - 4 wt% vinylacetate - 6 wt% vinyl alcohol, Sunvac® GF, which is a copolymer of 81 wt% vinylchloride - 4 wt% vinylacetate - 15 wt% hydroxylalkyl acrylate and Sunvac® OH, which is a copolymer of 81 wt% vinylchloride - 4 wt% vinylacetate - 15 wt% hydroxylalkyl acrylate, all commercially available from Yantai Suny Chem International; S-Lec E4-HA commercailly available from Sekisui; and VROH, LPOH and UMOH commercially available from Wuxi Honghui Chemical.

Another preferred binder is a vinylidene chloride copolymer comprising 90 wt % or less of vinylidene chloride based on the total weight of the binder. When the amount of vinylidene chloride is above 90 wt % based on the total weight of the binder, the crystallinity of the binder becomes too high resulting in a low solubility in the liquid carrier. Copolymerizaton of vinylidene chloride with further monomers renders the copolymer more amorphous and thus more soluble in the liquid carrier.

The vinylidene chloride copolymer preferably comprises a further monomer selected from the group consisting of vinyl chloride, alkyl acrylate, alkyl methacrylate, vinylether, vinylacetate, vinyl alcohol, acrylonitrile, methacrylonitrile, maleic acid, maleic anhydride, itaconic acid, itaconic acid anhydride, and crotonic acid.

Suitable vinylidene chloride copolymers include: the copolymer of vinylidene chloride, N-tert.-butylacrylamide, n-butyl acrylate, and N-vinyl pyrrolidone (e.g.70:23:3:4), the copolymer of vinylidene chloride, N-tert.-butylacrylamide, n-butyl acrylate, and itaconic acid (e.g. 70:21:5:2), the copolymer of vinylidene chloride, N-tert.-butylacrylamide, and itaconic acid (e.g. 88:10:2), the copolymer of vinylidene chloride, n-butylmaleimide, and itaconic acid (e.g. 90:8:2), the copolymer of vinyl chloride, vinylidene chloride, and methacrylic acid (e.g. 65:30:5), the copolymer of vinylidene chloride, vinyl chloride, and itaconic acid (e.g. 70:26:4), the copolymer of vinyl chloride, n-butyl acrylate, and itaconic acid (e.g. 66:30:4), the copolymer of vinylidene chloride, n-butyl acrylate, and itaconic acid (e.g. 80:18:2), the copolymer of vinylidene chloride, methyl acrylate, and itaconic acid (e.g.90:8:2), the copolymer of vinyl chloride, vinylidene chloride, N-tert.-butylacrylamide, and itaconic acid (e.g. 50:30:18:2). All the ratios given between brackets in the above-mentioned copolymers are ratios by weight.

Derivatives of maleic acid or maleic acid anhydride, such as for example the monomers according to Formulae a and b, may also be used as further monomer of the vinylidene chloride copolymer.

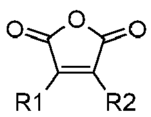

Formula a

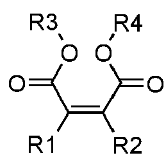

Formula b

wherein

R1 to R4 represent a hydrogen atom, an optionally substituted alkyl group containing from 1 to 5 carbon atoms, or an optionally substituted alkenyl group containing from 1 to 5 carbon atoms.

Deriviates of succinic acid or succinic acid anhydride, such as for example the monomers according to Formulae III to VI, may also be used as further monomer of the vinylidene chloride copolymer.

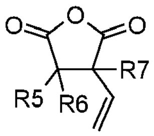
Formula c

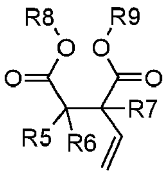
Formula d

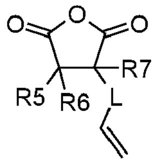
Formula e

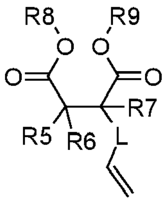
Formula f

wherein

R5 to R9 represent a hydrogen atom, an optionally substituted alkyl group containing from 1 to 5 carbon atoms, or an optionally substituted alkenyl group containing from 1 to 5 carbon atoms;
L represents a linking group selected from the group consisting of an alkylene group containing from 1 to 5 carbon atoms, a polyethylene glycol containing up to 5 ethylene glycol units, or a polypropylene glycol containing up to 5 propylene glycol units.

A preferred monomer according to Formula c is 3-ethenyloxolane-2,5-dione; preferred monomers according to Formula d are 2-ethenylbutanedioic acid and 1,4-dimethyl 2-ethenylbutanedioate.
The vinylidene chloride copolymer more preferably comprises a further monomer selected from the group consisting of vinyl chloride, acrylonitrile, maleci acid, maleic anhydride and an alkyl acrylate.
The vinylidene chloride copolymer most preferably comprises from 40 to 90 wt % of vinylidene chloride, from 0.5 to 50 wt % of vinyl chloride and from 0.5 to 5 wt % of acrylonitrile.
The alkyl acrylate and alkyl methacrylate referred to above is preferably a C1-C10 alkyl acrylate or methacrylate. Particular preferred alkyl acrylates or alkyl methacrylates are methyl and butyl acrylate or methyl and butyl methacrylate.
A preferred example of a vinylidene chloride copolymer that may be used in the conductive ink according to the present invention is IXAN® SGA-1, commercially available from Solvay.
Other vinylidene copolymers that may be used are IXAN® PNE613, IXAN®PV910, IXAN®PV919, IXAN®PVS801, IXAN®PVS815, IXAN®PVS100 or IXAN®PV708, all commercially available from Solvay; F310, F216, R222B or R204, all available from Asahi Kasei Chemicals.
Water based vinylidene copolymers may also be used in the present invention. Examples of such copolymers are Daran® 8730, Daran®8550, Daran®SL112, Daran®SL143, Daran®SL159 or Daran®8100, all commercially available from Owensboro Specialty Polymers; Diofan®193D, Diofan®P520, Diofan®P530 all commercially available from Solvay.
Two or more different binders may be used. For example, the vinylidene chloride copolymer described above may be combined with the vinylchloride copolymer described above.
The total amount of binder in the conductive ink is preferably between 0.1 and 15 wt %, more preferably between 0.2 and 7.5 wt%. When the amount of binder is too high, for example above 15 wt% relative to the total weight of the dispersion, the conductivity of the conductive ink tends to decrease. When the amount of binder is too low, for example less than 0.1 wt% relative to the total weight of the dispersion, no improvement in adhesion may be observed.

Surfactants

The conductive ink preferably comprises a surfactant. Various surfactants may be used. However, it has been observed that the addition to the conductive ink of a surfactant selected from the group consisting of Disperbyk 2151, Disperbyk 2025, and Diserbyk 2155 results in a further improvement of the adhesion of the dispersion, especially on ITO (Indium Tin Oxide) substrates. Particularly good results are obtained with Disperbyk-2151.
The amount of the surfactants is preferably between 0.01 and 10 wt%, more preferably between 0.05 and 5 wt%, most preferably between 0.1 and 1.0 wt %, relative to the total amount of the conductive ink.

Adhesion promoting compound

It has been observed that the addition of adhesion promotoring compounds may further improve the adhesion towards various substrates.
For example the commercially available adhesion promoting compound Byk-4511 may improve the adhesion, especially towards ITO (Indium Thin Oxide) substrates.
Particularly preferred adhesion promoting compounds are acidic polyesters. It has been observed that conductive inks comprising an acidic polyester are characterized by a substantial improved adhesion on ITO (Indium Thin

Oxide) substrates.

The amount of the acidic polyester is preferably between 0.01 and 10 wt%, more preferably between 0.05 and 5 wt%, most preferably between 0.1 and 1.0 wt %, relative to the total amount of the conductive ink.

The acidic polyester is typically a copolymer with acidic groups having an acid value from 15 up to 100 mg KOH/g. Examples of commercially available acidic polyesters include BYK-4510 (commercially available from Byk Altana), PLUSOLIT H-PD (commercially available from Mäder) or BORCHI GEN HMP-F (commercially available from OMG Borchers).

The acidic polyester is typically a polycondensate of a polyol and a polycarboxylic acid. The polyol and polycarboxylic acid are combined in desired proportions and chemically reacted using standard esterification (condensation) procedures to provide a polyester having both hydroxyl and carboxylic acid groups in the polyester resin. A triol is typically used to provide a branched polyester.

Examples of suitable polycarboxylic acids or anhydrides include, but are not limited to, maleic anhydride, maleic acid, fumaric acid, itaconic acid, phthalic acid, phthalic anhydride, isophthalic acid, trimellitic anhydride, terephthalic acid, naphthalene dicarboxylic acid, adipic acid, azelaic acid, succinic acid, sebacic acid and various mixtures thereof.

Examples of suitable diols, triols and polyols include, but are not limited to, ethylene glycol, propylene glycol, 1,3-propanediol, glycerol, diethylene glycol, dipropylene glycol, triethylene glycol, trimethylolpropane, trimethylolethane, tri propylene glycol, neopentyl glycol, pentaerythritol, 1,4- butanediol, trimethylol propane, hexylene glycol, cyclohexane dimethanol, and polyethylene or polypropylene glycol.

A preferred polyol is trimethylolpropane, a preferred polycarboxylic acid is adipic acid

Other preferred acidic polyesters are the reaction product of

(a) a polyester having a Molecular Weight (Mn) of 2000 to 10 000, a hydroxyl number of 20 to 75, and an acid value of 15 to 25, the polyester being a condensate of:

(i) a polyol component comprising a mixture of diols and triols,
(ii) a polyacid component comprising an alpha, beta-ethylenically unsaturated polycarboxylic acid, and

(b) a phosphorus acid.

Further examples of phosphatised polyesters are disclosed in WO2012/162301.

Dispersion-stabilizing compound (DSC)

The conductive ink according to the present invention may comprise a dispersion-stabilizing compound (DSC) according to Formulae VII, VIII, IX or X,

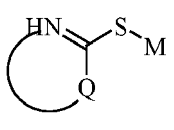
Formula VII

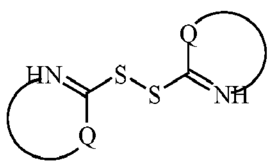
Formula VIII

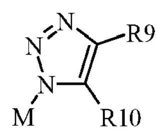
Formula IX

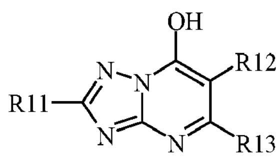
Formula X

wherein

Q represents the necessary atoms to form a substituted or unsubstituted five or six membered heteroaromatic ring;
M is selected from the group consisting of a proton, a monovalent cationic group, an alkyl group, a heteroalkylgroup and an acyl group;
R9 and R10 are independently selected from the group consisting of a hydrogen, a substituted or unsubstituted alkyl group, a substituted or unsubstituted alkenyl group, a substituted or unsubstituted alkynyl group, a substitued or unsubstituted alkaryl group, a substituted or unsubstituted aralkyl group, a substituted or unsubstituted aryl or heteroaryl group, a hydroxyl group, a thioether, an ether, an ester, an amide, an amine, a halogen, a ketone and an aldehyde;
R9 and R10 may represent the necessary atoms to form a five to seven membered ring;
R11 to R13 are independently selected from the group consisting of a hydrogen, a substituted or unsubstituted alkyl group, a substituted or unsubstituted alkenyl group, a substituted or unsubstituted alkynyl group, a substituted or unsubstituted alkaryl group, a substituted or unsubstituted aralkyl group, a substituted or unsubstituted aryl or

heteroaryl group, a hydroxyl group, a thiol, a thioether, a sulfone, a sulfoxide, an ether, an ester, an amide, an amine, a halogen, a ketone, an aldehyde, a nitrile and a nitro group;
R12 and R13 may represent the necessary atoms to form a five to seven membered ring.

The dispersion-stabilizing compound is preferably a compound according to Formula VII.
The dispersion-stabilizing compound is more preferably a compound according to Formula VII, wherein Q represents the necessary atoms to form a five membered heteroaromatic ring.
A particular preferred dispersion-stabilizing compound is a compound according Formula VII, wherein Q is a five membered heteroaromatic ring selected from the group consisting of an imidazole, a benzimidazole, a thiazole, a benzothiazole, an oxazole, a benzoxazole, a 1,2,3-triazole, a 1,2,4-triazole, an oxadiazole, a thiadiazole and a tetrazole.
Some examples of dispersion-stabilizing compounds are shown in the Table 2.

Table 2

| DSC | Chemical Formula |
|---|---|
| DCS-01 | 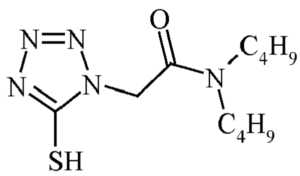 |
| DCS-02 | 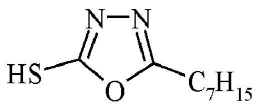 |
| DCS-03 | 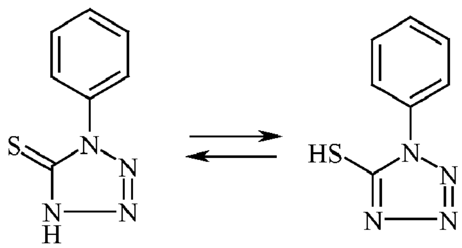 |
| DCS-04 | 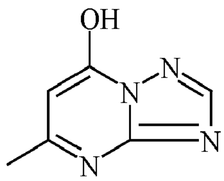 |
| DCS-05 | 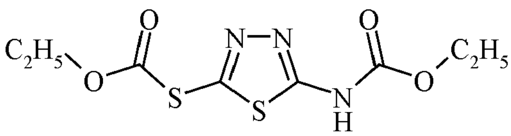 |
| DCS-06 | 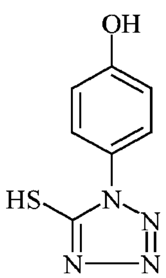 |

(continued)

| DSC | Chemical Formula |
|---|---|
| DCS-07 | 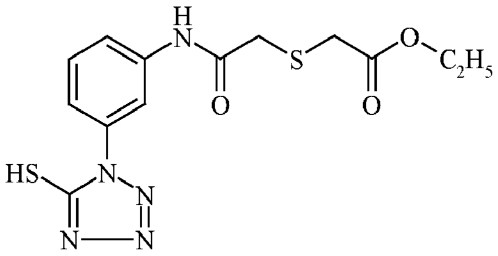 |
| DCS-08 | 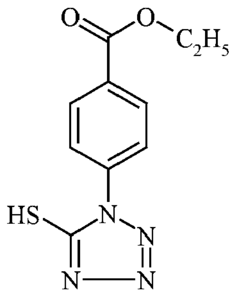 |
| DCS-09 | 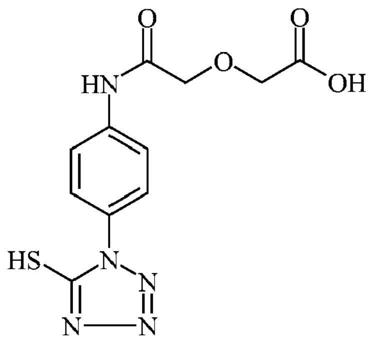 |
| DCS-10 | 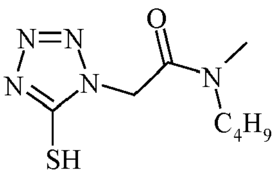 |
| DCS-11 | 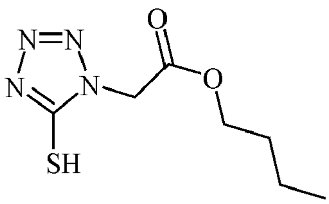 |
| DCS-12 | 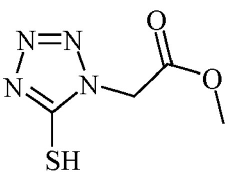 |

(continued)

| DSC | Chemical Formula |
|---|---|
| DCS-13 | 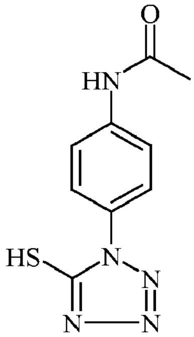 |
| DCS-14 | 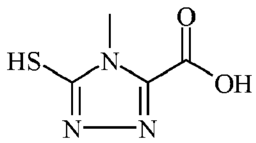 |
| DCS-15 | 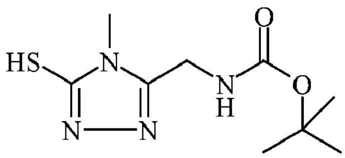 |
| DCS-16 | 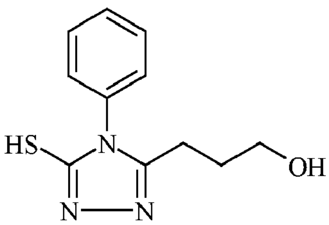 |

The dispersion-stabilizing compound is preferably selected from the group consisting of N,N-dibutyl-(2,5-dihydro-5-thioxo-1H-tetrazol-1-yl-acetamide, 5-heptyl-2-mercapto-1,3,4-oxadiazole, 1-phenyl-5-mercaptotetrazol, 5-methyl-1,2,4-triazolo-(1,5-a) primidine-7-ol, and S-[5-[(ethoxycarbonyl)amino]-1,3,4-thiadiazol-2-yl] O-ethyl thiocarbonate.

The dispersion-stabilizing compounds according to Formula VII to X are preferably non-polymeric compounds. Non-polymeric compounds as used herein means compounds having a Molecular Weight which is less preferably than 1000, more preferably less than 500, most preferably less than 350.

The amount of the dispersion-stabilizing compounds (DSC) expressed as wt % relative to the total weight of silver (Ag) in the metallic nanoparticles is preferably between 0.005 and 10.0, more preferably between 0.0075 and 5.0, most preferably between 0.01 and 2.5. When the amount of the dispersion-stabilizing compound relative to the total weight of silver in the metallic nanoparticles is too low, the stabilizing effect may be too low, while a too high amount of the dispersion-stabilizing compound may adversely affect the conductivity of the coating or patterns obtained with the conductive ink.

## Additives

To optimize the coating or printing properties, and also depending on the application for which it is used, additives such as reducing agents, wetting/levelling agents, dewettting agents, rheology modifiers, adhesion agents, tackifiers, humectants, jetting agents, curing agents, biocides or antioxidants may be added to the conductive ink described above.

It may be advantageous to add to the conductive ink a small amount of an inorganic acid or a compound capable of generating such an acid during curing of a metallic layer or pattern formed from the conductive ink such as disclosed in EP-A 2821164. Higher conductivities and/or lower curing temperatures were observed of layers or patterns formed from such conductive inks.

Higher conductivities and/or lower curing temperatures may also be obtained when using metallic nanoparticles dispersions containing a compound according to Formula XI, as disclosed in WO2015/000937.

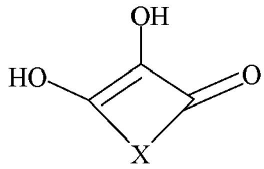

Formula XI

wherein

X represents the necessary atoms to form a substituted or unsubstituted ring.

A particularly preferred compound according to Formula XI is an ascorbic or erythorbic acid derivative compound.

A thickening agent may be added to increase the viscosity of the printing or coating fluid. Preferred thickening agents may be selected from amorphous silica, polyvinylpyrrolidones having different Molecular Weights, and cellulose based thickening agents. A particular preferred thickening agent is hydroxypropylcellulose.

## Preparation of the conductive ink

The preparation of the conductive ink according to the present invention typically comprises the addition of the liquid carrier, the optional binder and optional additives to the metallic nanoparticles by using a homogenization technique such as stirring, high shear mixing, ultra-sonication, or a combination thereof.

The metallic nanoparticles from which the conductive ink is made is typically a paste or a highly concentrated dispersion of metallic nanoparticles. A preferred preparation method of the metallic nanoparticles is described below.

The homogenization step can be carried out at elevated temperature up to 100°C. In a preferred embodiment, the homogenization step is carried out at temperature equal or below 60°C.

In a preferred embodiment, the conductive ink is used in an inkjet printing method. Such a conductive ink, also referred to as metallic inkjet fluid or ink or conductive inkjet fluid or ink, preferably has a viscosity lower than 35 mPa.s, preferably lower than 28 mPa.s, and most preferably between 2 and 25 mPa.s at 25°C and measured at a shear rate of 90 $s^{-1}$.

When using so-called throughflow printheads, the viscosity of the metallic inkjet fluid may be higher, preferably below 60 mPa.s at 25°C and at a shear rate of 90 $s^{-1}$. A higher viscosity limit for the metallic inkjet fluid opens up more compositional variations of the fluid which may be advantageous towards more concentrated and/or more stable metallic inkjet fluids

In another preferred embodiment, the conductive ink is used in a flexographic printing process. Such a conductive ink, also referred to as metallic flexo ink or conductive flexo ink, preferably has a viscosity between 10 and 10000 mPa.s, more preferably between 50 and 5000 mPa.s, most preferably between 100 and 2500 mPa.s measured at 25°C and at a shear rate of 100 $s^{-1}$.

In another preferred embodiment, the conductive ink is used in a screen printing process. Such a conductive ink, also referred to as metallic screen ink or conductive screen ink, preferably has a viscosity between 3000 and 1000000 mPa.s, most preferably between 5000 and 750000 mPa.s, most preferably between 10000 and 500000, measured at 25°C and at a shear rate of 1 $s^{-1}$.

## Metallic layers or patterns

The metallic layers or patterns are prepared by a method comprising the steps of applying a conductive ink as defined above on a support followed by a sintering step.

The support may a glass, a paper or a polymeric support.

A particular preferred support is a photovoltaic (PV) substrate such as a crystalline Si (c-Si) substrate, an amorphous Si (a-Si) substrate, or a CIGS substrate. These PV-substrates preferably include a transparent conductive layer such as a transparent conductive oxide (TCO) layer (for example Indium Tin Oxide (ITO) layer, a zinc oxide layer, an aluminium doped zinc oxide layer) or a transparent layer containing a conductive polymer such as polythiophene.

The above mentioned transparent conductive layer(s) improve the efficiency of the solar cells (surface passivation) and realize a full surface transparent contact.

In a typical silicon heterojunction solar cell, a n-type c-Si layer is wrapped between intrinsic and doped (p-type) a-Si layers as shown in Figure 2. A silver pattern, often referred to as fingers, is printed on the side of the solar cell facing the sun (top side). On the other side (backside) a non-patterned metallic, for example aluminium or silver layer may be

applied. However, to improve the efficiency also on the backside a patterned metallic layer, preferably a silver pattern is preferably applied.

Preferred polymeric supports are polycarbonate, polyethylene terephthalate (PET) or polyvinylchloride (PVC) based supports. A preferred PET support is for example an AUTOSTAT™ heat stabilized polyester from MacDermid.

Polymeric supports are preferably provided with so-called subbing layers to improve the adhesion of the applied conductive inkjet, screen or flexo inks. Such subbing layers are typically based on vinylidene copolymers, polyesters, or (meth)acrylates.

Useful subbing layers for this purpose are well known in the art and include, for example, polymers of vinylidene chloride such as vinylidene chloride/acrylonitrile/ acrylic acid terpolymers or vinylidene chloride/methyl acrylate/itaconic acid terpolymers.

Other preferred subbing layers include a binder based on a polyester-urethane copolymer. In a more preferred embodiment, the polyester-urethane copolymer is an ionomer type polyester urethane, preferably using polyester segments based on terephthalic acid and ethylene glycol and hexamethylene diisocyanate. A suitable polyester-urethane copolymer is Hydran™ APX101 H from DIC Europe GmbH.

The application of subbing layers is well-known in the art of manufacturing polyester supports for silver halide photographic films. For example, the preparation of such subbing layers is disclosed in US 3649336 and GB 1441591.

An acid generating compound may be incorporated in a primer layer on a support as disclosed in WO2015/000932. A preferred primer comprises a copolymer of vinylidene chloride, an acrylic ester and itaconic acid.

In a preferred embodiment, the subbing layer has a dry thickness of no more than 0.2 μm or preferably no more than 200 mg/m$^2$.

Another preferred support is a support based on transparent conductive oxides. Such a support is typically a glass or polymer support whereupon a layer or pattern of a transparent conductive oxide (TCO) is provided. Examples of such conductive oxides are ITO (Indium Tin Oxide), ZnO, $SnO_2$ or doped oxides such as ZnO:Al. A particularly preferred TCO is ITO.

When used for the preparation of heterojunction solar cell, the silver inks are applied on an TCO layer, preferably an ITO layer or a doped ITO layer.

A preferred paper based support is the Powercoat® paper substrate, a substrate designed for printed electronics by Arjowiggins Creative Papers.

Multiple metallic layers or patterns, i.e. a stack of patterned or unpatterned layers, may be applied on a substrate. The support referred to in the method of preparing the metallic layers or patterns thus also encompass a previously applied metallic layer or pattern.

Metallic layers may be provided onto a support by co-extrusion or any conventional coating technique, such as dip coating, knife coating, extrusion coating, spin coating, spray coating, blade coating, slot die coating, slide hopper coating and curtain coating.

Metallic layers and in particular metallic patterns may be provided onto a support by a printing method such as intaglio printing, screen printing, flexographic printing, offset printing, inkjet printing, gravure offset printing, etc.

Preferred printing methods are an inkjet, screen printing and flexographic printing method.

For the preparation of heterojunction solar cells, screen printing is preferably used to apply the conductive inks on an ITO layer.

Another method to provide a metallic layer or pattern on a support is aerosol jet printing. Aerosol Jet Printing, which has been developed by Optomec, preserves most of the advantages of inkjet printing, while reducing many of its limitations. The technique is developed for use in the field of printed electronics. The technique is disclosed in for example US2003/0048314, US2003/0020768, US2003/0228124 and WO2009/049072. An Aerosol Jet Print Engine is commercially available from Optomec, for example the Aerosol Jet Printer OPTOMEC AJ 300 CE.

Virtually any liquid having a viscosity less than 5000 mPa.s can be deposited using the Aerosol Jet Printing technique. Using higher viscous fluids may be advantageous with respect to the stability of the metallic inks

## Sintering Step

After the layers or patterns are applied on the support, a sintering step, also referred to as curing step, is carried out. During this sintering step, solvents evaporate and the metallic particles sinter together. Once a continuous percolating network is formed between the metallic particles, the layers or patterns become conductive. Conventional sintering is typically carried out by applying heat. The sintering temperature and time are dependent on the support used and on the composition of the metallic layer or pattern. The sintering step for curing the metallic layers may be performed at a temperature below 250°C, preferably below 200°C, more preferably below 180°C, most preferably below 160°C.

The sintering time may be less than 60 minutes, preferably between 2 and 30 minutes and more preferably between 3 and 20 minutes, depending on the selected temperature, support and composition of the metallic layers.

However, instead of or in addition to the conventional sintering by applying heat, alternative sintering methods

such as exposure to an Argon laser, to microwave radiation, to IR radiation, to UV radiation or to low pressure Argon plasma, photonic curing, plasma or plasma enhanced, electron beam, laser beam or pulse electric current sintering may be used. When using pulse electric current sintering, the electric current may be directly applied to the conductive ink or indirectly via induction.

Another curing method uses the so-called Near InfraRed (NIR) curing technology. The metal of the coating or the pattern, for example silver, may act as absorber for the NIR radiation.

Still another curing method uses heated steam instead of hot air temperature curing which also efficiently heats up and sinters the metal of the coating or the pattern.

The metallic layers of the present invention allow to use lower curing temperatures than the prior art processes. When used to prepare heterojunction solar cells, it is important that the curing temperatures do not negatively affect the heterojunction. Typically, at temperatures above 200 - 220°C the efficiency of heterojunction solar cells decreases. At those high temperatures diffusion phenomena worsen the charge separation at the heterojunction. Also for other types of solar cells the efficiency decreases at higher temperatures. For example organic solar cells may lose their efficiency at higher temperatures due to recrystallization phenomena. Therefore it is very important that curing of the applied silver layer or pattern may be carried out a lower temperatures, below 200 - 220°C.

The curing time may also be substantially reduced leading to the possibility of having higher production per hour than the prior art processes. The conductivity of the metallic layers are maintained or even improved in certain cases.

To further increase the conductivity or to lower the curing temperature it may be advantageous to contact the metallic layer or pattern with a solution containing an acid or an acid precursor capable or releasing the acid during curing of the metallic layer or pattern, as disclosed in WO2015/000932.

The metallic layers or patterns may be used in various electronic devices or parts of such electronic devices as for example organic photo-voltaics (OPV's), inorganic photo-voltaics (c-Si, a-Si, CdTe, CIGS), OLED displays, OLED lighting, inorganic lighting, RFID's, organic transistors, thin film batteries, touch-screens, e-paper, LCD's, plasma, sensors, membrane switches or electromagnetic shielding.

When the conductive ink is used to prepare heterojunction solar cells sintering is typically performed as part of the annealing step used to to prepare the solar cells.

## Preparation of the metallic nanoparticles

The metallic nanoparticle according to the present invention may be prepared by any known preparation method.

A particularly preferred method to prepare the metallic nanoparticles is disclosed in EP-A 2781562.

The conductive ink obtained by the method disclosed in EP-A 2781562 typically contains at least 15 wt %, more preferably at least 30 wt%, most preferably at least 50 wt % of metallic nanoparticles, relative to the total weight of the dispersion. This highly concentrated dispersion is then used to prepare the conductive ink according to the present invention as described above.

## EXAMPLES

## Materials

All materials used in the following examples were readily available from standard sources such as ALDRICH CHEMICAL Co. (Belgium) and ACROS (Belgium) unless otherwise specified. The water used was deionized water.

**Silver oxide** ($Ag_2O$) was prepared by the precipitation of silver nitrate in an alkaline aqueous solution of sodium hydroxide (33 wt%) followed by filtration and drying.

**Solbin® A** is a copolymer of 92 wt% vinylchloride, 3 wt% vinylacetate, and 5 wt% vinylalchohol commercially available from SHIN ETSU.

**Disperbyk 2151** is a dispersing agent commercially available from BYK (ALTANA).

**Byk 4510** is an adhesion promoting compound commercially available from BYK (ALTANA).

**Rhodiasolv® PolarClean** is methyl-5-(dimethylamino)-2-methyl-5-oxopentonaoate commercially available from SOLVAY.

**PVPA** is a polyvinylphoshonic acid commercially available as LUGALVAN ED 93048 from BASF.

**VPA** is a vinylphosphonic acid commercially available as PVA 90 from ARCHIMICA.

**VPDME** is vinylphosphonic acid dimethyl ester commercially available from ARCHIMICA.

**VPDEE** is vinylphosphonic acid diethyl ester commercially available from TCI EUROPE.

**Measurements Methods**

Conductivity of silver coatings

The surface resistance (SER) of the silver coatings was measured using a four-point collinear probe. The surface or sheet resistance was calculated by the following formula:

$$SER = (\pi/\ln 2)*(V/I)$$

wherein

- *SER* is the surface resistance of the layer expressed in Ω/square;
- π is a mathematical constant, approximately equal to 3.14;
- In2 is a mathematical constant equal to the natural logarithmic of value 2;
- V is the voltage measured using the four-point probe measurement device;
- I is the source current measured by the four-point probe measurement device.

For each sample, six measurements were performed at different positions of the coating and the average value was calculated.

The silver content $M_{Ag}$ (g/m$^2$) of the coatings was determined by WD-XRF.

The conductivity of the coated layers was then determined by calculating the conductivity as a percentage of the bulk conductivity of silver using the following formula:

$$\%Ag_{(bulk)} = \frac{\sigma_{Coat}}{\sigma_{Ag}} \times 100$$

$$\%Ag_{(bulk)} = \frac{\rho_{Ag}}{\sigma_{Ag} \times SER \times M_{Ag}} \times 100$$

wherein $\sigma_{Ag}$ the specific conductivity of silver (equal to $6.3 \times 10^7$ S/m), $\sigma_{Coat}$ is the specific conductivity of the Ag coating and $\rho_{Ag}$ is the density of silver ($1.049 \times 10^7$ g/m$^3$).

Contact Resistance

Silver lines (30) were applied on a glass plate provided with an ITO layer (20) available from Delta Technologies at a varying distande (d) from each other, as depicted in Figure 1a.

The Resistance ($R_T$) between ITO and the silver lines was measured as function of the distance d between the silver lines as shown in Figure 1b. This results in a graph as depicted in Figure 1c from which the contact resistance ($R_c$) can be derived.

Example 1

Preparation of the silver nanoparticle dispersion NPD-01

78.0 g of silver oxide was slowly added, while stirring, to a 1 l reactor containing 275.0 g of pentanoic acid and 401.0 g of 2-pyrrolidone. The temperature of the mixture was kept at 25°C.

After complete addition of the silver oxide, the suspension was stirred overnight at 25°C.

Then, 300.0 g of N,N-diethylhydroxylamine was added in a time span of 1.5 hours to the suspension. The temperature of the reaction mixture was kept at 25 °C. When all reducing agent was added, the reaction mixture was kept at 25 °C while stirring for another hour.

The reaction mixture is then fed to a sedimentation vessel, where it was kept overnight, without stirring. The supernatant was carefully removed from the sediment.

The obtained sediment was washed four times, two times with Dowanol PM™ (547 g) and two times with butylcellosolve™ (547 g). In each washing step, the solvent was added to the sediment and the resulting suspension stirred for 0.5 hour at 300 rpm. Then, the unstirred suspension was kept for another hour, and the supernatant carefully removed.

After the last washing step with butylcellosolve™, the sediment was centrifuged, in a centrifugal decanter from Rousselet Robatel (France) at 3000 rpm during 0.5 hour.

The obtained silver nanoparticle dispersion NPD-01 had ± 75 wt % of silver, relative to the total weight of the dispersion.

Preparation of the silver inks SI-01 to SI-10

The Silver Inks SI-01 to SI-10 were prepared by mixing together while stirring the non-silver ingredients of Table 4 at room temperature. The silver nanoparticle dispersion NPD-01 was then added to the clear solution, followed by high shear homogenization.

Table 4

| Ingredient (wt%) | SI-01 | SI-02 | SI-03 | SI-04 | SI-05 |
|---|---|---|---|---|---|
| NPD-01 | 77.40 | = | 77.30 | = | = |
| Solbin A | 0.73 | 0.52 | 0.73 | 0.52 | 0.73 |
| PVPA | - | - | 0.10 | = | 0.20 |
| Rhodiasolv Polarclean | 6.9 | 7.2 | 6.9 | 7.2 | 6.9 |
| Byk-4510 | 1.49 | = | 1.48 | = | = |
| Disperbyk 2151 | 0.60 | = | = | = | = |
| | | | | | |
| Ingredient (wt%) | SI-06 | SI-07 | SI-08 | SI-09 | SI-10 |
| NPD-01 | 77.30 | 77.20 | 77.30 | 77.10 | = |
| Solbin A | 0.52 | 0.73 | = | 0.73 | 0.52 |
| PVPA | 0.20 | 0.30 | = | 0.40 | = |
| Rhodiasolv Polarclean | 7.1 | 6.9 | 7.1 | 6.9 | 7.1 |
| Byk-4510 | 1.48 | = | = | = | = |
| Disperbyk 2151 | 0.60 | = | = | = | = |

Evaluation of the Silver Inks SI-01 to SI-10

The contact resistance (Rc) with ITO and the conductivity (% Ag-bulk) of the silver inks, determined as described above, are given in Table 5.

Table 5

| Silver Ink | % Ag-bulk | Rc (ohm.cm$^2$) |
|---|---|---|
| SI-01 | 8,8 | 0,0160 |
| SI-02 | 10,2 | 0,0181 |
| SI-03 | 27,8 | 0,0148 |
| SI-04 | 21,6 | 0,0145 |
| SI-05 | 32,7 | 0,0096 |
| SI-06 | 37,5 | 0,0078 |
| SI-07 | 42,0 | 0,0048 |

(continued)

| Silver Ink | % Ag-bulk | Rc (ohm.cm$^2$) |
|---|---|---|
| SI-08 | 39,7 | 0,0056 |
| SI-09 | 36,0 | 0,0051 |
| SI-10 | 34,2 | 0,0018 |

It is clear from the results of Table 5 that silver inks comprising PVPA all have a lower contact resistance towards IT0 and a high conductivity.

Example 2

Preparation of the silver inks SI-11 to SI-19

The Silver Inks SI-11 to SI-19 were prepared by mixing together while stirring the non-silver ingredients of Table 6 until a clear solution was obtained. The silver nanoparticle dispersion NPD-01 was then added to the clear solution, followed by high shear homogenization.

Table 6

| Ingredient (wt%) | SI-11 | SI-12 | SI-13 | SI-14 | SI-15 |
|---|---|---|---|---|---|
| NPD-01 | 79.30 | = | 79.20 | = | 79.30 |
| Solbin A | 0.50 | = | = | = | = |
| VPA | - | - | 0.02 | 0.035 | 0.05 |
| Rhodiasolv Polarclean | 3.2 | = | = | = | = |
| Byk-4510 | 1.49 | = | 1.48 | = | 1.49 |
| Disperbyk 2151 | 0.61 | = | = | = | = |
| | | | | | |
| Ingredient (wt%) | SI-16 | SI-17 | SI-18 | SI-19 | |
| NPD-01 | 79.20 | = | 79.10 | = | |
| Solbin A | 0.50 | = | 0.49 | = | |
| VPA | 0.10 | 0.10 | 0.20 | 0.30 | |
| Rhodiasolv Polarclean | 3.2 | = | = | = | |
| Byk-4510 | 1.48 | = | = | = | |
| Disperbyk 2151 | 0.61 | = | = | = | |

Evaluation of the Silver Inks SI-11 to SI-19

The contact resistance (Rc) with ITO and the conductivity (% Ag-bulk) of the silver inks, determined as described above, are given in Table 7.

Table 7

| Silver Ink | %Ag-bulk | $R_c$ (ohm.cm$^2$) |
|---|---|---|
| SI-11 | 46,2 | >1 |
| SI-12 | 28,0 | >1 |
| SI-13 | 64,5 | >1 |
| SI-14 | 51,1 | >1 |

(continued)

| Silver Ink | %Ag-bulk | $R_c$ (ohm.cm$^2$) |
|---|---|---|
| SI-15 | 28,2 | 0,0118 |
| SI-16 | 40,6 | 0,0081 |
| SI-17 | 29,9 | 0,0121 |
| SI-18 | 30,5 | 0,0163 |
| SI-19 | 10,8 | 0,0730 |

It is clear from the results of Table 7 that silver inks comprising a suficient amount of VPA have a lower contact resistance towards IT0 and a high conductivity. A too high amount of VPA results in a decrease of the conductivity.

**Example 3**

Preparation of the silver inks SI-20 to SI-24

The Silver Inks SI-20 to SI-24 were prepared by mixing together while stirring the non-silver ingredients of Table 8 until a clear solution was obtained. The silver nanoparticle dispersion NPD-01 was then added to the clear solution, followed by high shear homogenization.

Table 8

| Ingredient (wt%) | SI-20 | SI-21 | SI-22 | SI-23 | SI-24 |
|---|---|---|---|---|---|
| NPD-01 | 79.30 | 79.20 | = | = | = |
| Solbin A | 0.50 | = | = | = | = |
| VPA | - | 0.10 | - | - | - |
| VPDME | - | - | 0.10 | - | - |
| VPDEE | - | - | - | 0.10 | - |
| PVP | - | - | - | - | 0.10 |
| Rhodiasolv Polarclean | 3.2 | = | = | = | = |
| Byk-4510 | 1.49 | = | 1.48 | = | 1.49 |
| Disperbyk 2151 | 0.61 | = | = | = | = |

Evaluation of the Silver Inks SI-20 to Si-24

The contact resistance (Rc) with ITO of the silver inks, determined as described above, is given in Table 9.

Table 9

| Silver Ink | R (ohm.cm$^2$) |
|---|---|
| SI-20 | >1 |
| SI-21 | 0.1 |
| SI-22 | 0.75 |
| SI-23 | 0.1 |
| SI-24 | 0.85 |

From the results in Table 9 it is clear that the contact resistance towards ITO decreases when VPA, VPDME, VPDEE or PVP is added to the silver ink.

## Claims

1. A conductive ink comprising metallic nanoparticles, a liquid carrier and an optional binder, **characterized in that** the conductive ink further includes a compound R selected from the group consisting of vinyl phosphonic acid, an ester of vinyl phosphonic acid and a homo- or copolymer thereof.

2. The conductive ink according to claim 1 wherein the ester of vinyl phosphonic acid is dimethyl- or diethyl vinylphosphonate.

3. The conductive ink according to claim 1 or 2 wherein the amount of compound R is from 0.05 to 5 wt% relative to the total weight of the ink.

4. The conductive ink according to any of the preceding claims wherein the metallic nanoparticles are silver nanoparticles.

5. The conductive ink according to any of the preceding claims wherein the binder includes a copolymer of vinyl chloride and a hydroxyfunctional monomer.

6. The conductive ink according to claim 5 wherein the amount of the binder is from 2.5 to 7.5 wt % relative to the total weight of the ink.

7. The conductive ink according to any of the preceding claims wherein the liquid carrier includes a solvent selected from the group consisting of 2-phenoxy-ethanol, propylene-carbonate, n-butanol, gamma-butyro-lactone, dimethylsulphoxide, 2-butoxyethanol, dipropylene glycol methyl ether acetate, methyl isobutyl keton, propylene glycol mono methyl ether acetate, methyl butyro-lactone and methyl-5-(dimethylamino)-2-methyl-5-oxopentonaoate.

8. The conductive ink according to any of the preceding claims further comprising an acidic polyester.

9. The conductive ink according to any of the preceding claims wherein the amount of metallic nanoparticles is at least 50 wt%.

10. A method of preparing a metallic layer or pattern comprising the step of applying the conductive ink as defined in any of the claims 1 to 9 on a substrate followed by a sintering step.

11. The method according to claim 10 wherein the substrate is an ITO layer provided on a polymeric or glass support.

12. The method according to claim 10 or 11 wherein the conductive ink is applied on the substrate by a printing method selected from screen printing, flexographic printing or inkjet printing.

13. The method according to any of the claims 10 to 12 wherein sintering is carried out at a temperature of 250°C or less during 30 minutes or less.

14. Use of a conductive ink as defined in any of the claims 1 to 9 to prepare a heterojunction solar cell.

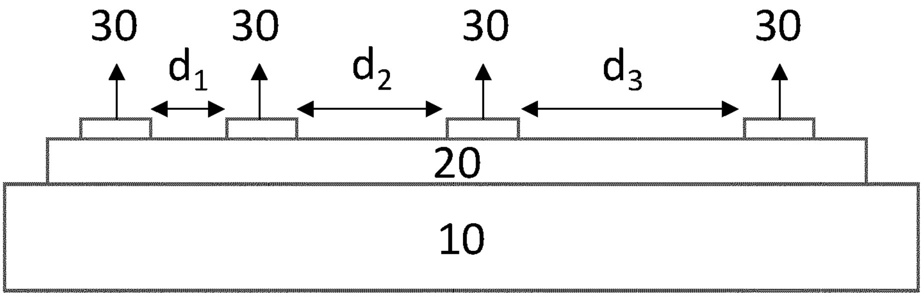


Figure 1a

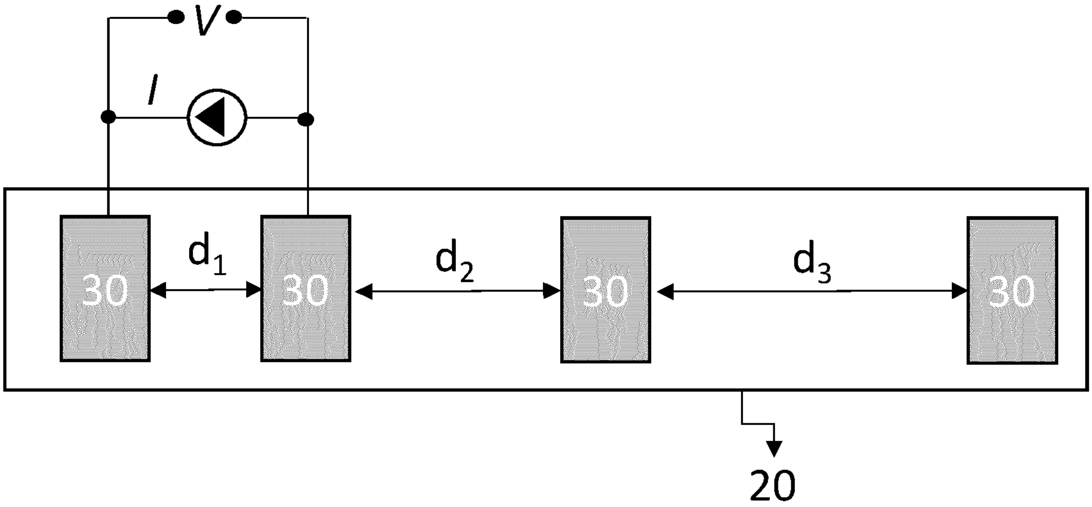


Figure 1b

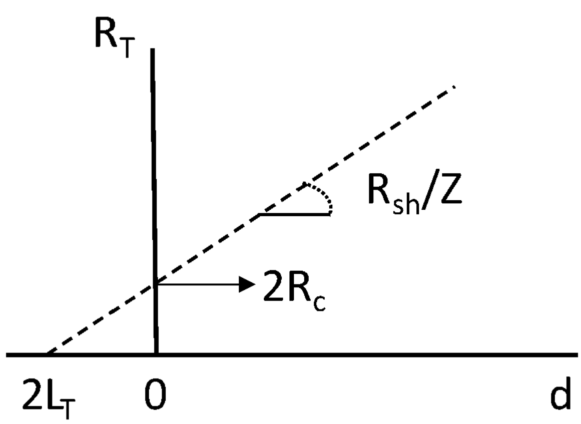


Figure 1c

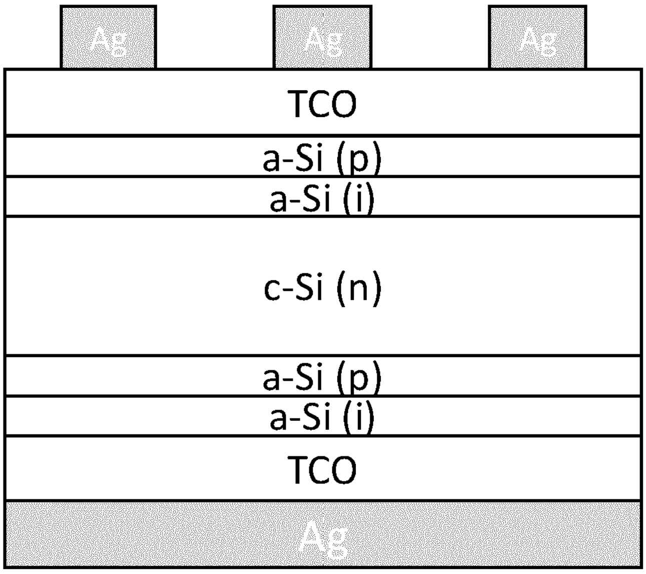


Figure 2

Europäisches Patentamt
European Patent Office
Office européen des brevets

# EUROPEAN SEARCH REPORT

Application Number
EP 21 20 0941

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/110902 A1 (HENKEL AG & CO KGAA [DE]; CHENG CHIH-MIN [US] ET AL.) 11 September 2009 (2009-09-11) * example 16; table 2 * ----- | 1-14 | INV. C09D11/52 C09D11/106 C09D11/322 C09D11/037 C09D11/36 C09D11/033 |
| A | US 2016/272734 A1 (BRUST THOMAS B [US] ET AL) 22 September 2016 (2016-09-22) * claims; examples * ----- | 1-14 | |
| A,D | WO 2017/102574 A1 (AGFA-GEVAERT [BE]) 22 June 2017 (2017-06-22) * claims; examples * ----- | 1-14 | |
| A,D | EP 3 287 499 A1 (AGFA-GEVAERT [BE]) 28 February 2018 (2018-02-28) * claims; examples * ----- | 1-14 | |
| | | | TECHNICAL FIELDS SEARCHED (IPC) |
| | | | C09D |

1 The present search report has been drawn up for all claims

| Place of search | Date of completion of the search | Examiner |
|---|---|---|
| Munich | 14 March 2022 | Schmitz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 21 20 0941

This annex lists the patent family members relating to the patent documents cited in the above-mentioned European search report. The members are as contained in the European Patent Office EDP file on
The European Patent Office is in no way liable for these particulars which are merely given for the purpose of information.

14-03-2022

| Patent document cited in search report | Publication date | Patent family member(s) | Publication date |
|---|---|---|---|
| WO 2009110902 A1 | 11-09-2009 | TW 200939250 A | 16-09-2009 |
| | | WO 2009110902 A1 | 11-09-2009 |
| US 2016272734 A1 | 22-09-2016 | US 2016272734 A1 | 22-09-2016 |
| | | US 2016274460 A1 | 22-09-2016 |
| | | US 2016274461 A1 | 22-09-2016 |
| WO 2017102574 A1 | 22-06-2017 | CN 108367348 A | 03-08-2018 |
| | | EP 3389896 A1 | 24-10-2018 |
| | | JP 6703110 B2 | 03-06-2020 |
| | | JP 2019505621 A | 28-02-2019 |
| | | KR 20180096626 A | 29-08-2018 |
| | | US 2018371278 A1 | 27-12-2018 |
| | | WO 2017102574 A1 | 22-06-2017 |
| EP 3287499 A1 | 28-02-2018 | CN 109642101 A | 16-04-2019 |
| | | EP 3287499 A1 | 28-02-2018 |
| | | US 2019185686 A1 | 20-06-2019 |
| | | WO 2018037072 A1 | 01-03-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2010143591 A
- US 2009142482 A
- US 20060264518 A
- EP 2147733 A
- EP 2139007 A
- EP 803551 A
- EP 2012952 A
- EP 2030706 A
- EP 1683592 A
- EP 166617 A
- EP 2119747 A
- EP 2087490 A
- EP 2010314 A
- WO 2008151066 A
- WO 2006076603 A
- WO 2009152388 A
- WO 2009157393 A
- EP 2781562 A
- EP 3099145 A
- EP 3287499 A
- EP 3099146 A
- WO 2017102574 A
- EP 2671927 A
- WO 2012162301 A
- EP 2821164 A
- WO 2015000937 A
- US 3649336 A
- GB 1441591 A
- WO 2015000932 A
- US 20030048314 A
- US 20030020768 A
- US 20030228124 A
- WO 2009049072 A

### Non-patent literature cited in the description

- Approaches to the synthesis and Characterization of Spherical and Anisotropic Silver Nanomaterials. Metallic Nanomaterials. Wiley-VCH Verlag GmbH&Co.KGaA, vol. 1